# EUROPEAN PATENT APPLICATION

(11) **EP 4 656 863 A1**
(43) Date of publication of application: **03.12.2025**
(21) Application number: 24178549.2
(22) Date of filing: 28.05.2024
(51) Int. Cl.: F02M 21/02, F01N 3/02

(54) **A HYDROGEN POWER SYSTEM WITH AN EXHAUST FLUID TEMPERATURE CONTROL SYSTEM**

(71) Applicant: Volvo Construction Equipment AB, 631 85 Eskilstuna (SE)
(72) Inventor: Ekman, Gordon, 342 63 Moheda (SE); Örkenrud, Kim, 352 64 Växjö (SE); Kvist, Roland, 360 42 Braås (SE)
(74) Representative: Valea AB

(57) **Abstract**

A hydrogen power system (1) comprising a hydrogen-powered power plant (2), an exhaust (3) coupled to the power plant (2) for emitting exhaust fluid from the power plant (2), a hydrogen storage container (4) coupled to the power plant (2), and an exhaust fluid temperature control system (13),
said exhaust fluid temperature control system (13) comprising:
a first heat exchanger (5) adapted to exchange heat energy with the exhaust fluid,
a second heat exchanger (6) adapted to exchange heat energy with the hydrogen storage container (4) or with hydrogen inside the hydrogen storage container (4),
fluid conduits adapted to enable circulation of coolant fluid between the first (5) and second (6) heat exchangers, and
a circulation pump (7) adapted to control circulation of said coolant fluid through said fluid conduits.

## Description

### Technical field

The present disclosure relates to a hydrogen power system. The disclosure can be applied in heavy-duty vehicles, such as trucks, buses, and construction equipment. Although the disclosure may be described with respect to a particular vehicle, the disclosure is not restricted to any particular vehicle.

### Background

A hydrogen power system may be used to provide power to drive a machine or a vehicle, either directly or by driving a generator for providing electric power used to drive the machine or vehicle. Hydrogen power systems use power from a source of hydrogen and a fuel cell or internal combustion engine to convert the hydrogen to power for the machine or vehicle. Exhaust fluid from the hydrogen power system may contain water and/or water vapour, causing fog around the area where the machine or vehicle is used. Fog reduces visibility and reduced visibility makes it more difficult to work and increases the risk of accidents.

### Summary

A goal of the disclosure is to mitigate formation of fog caused by a hydrogen power system. According to a first aspect, a hydrogen power system is provided. An example of the hydrogen power system is defined in claim 1, with alternative examples defined in the dependent claims. The hydrogen power system comprises a hydrogen-powered power plant, an exhaust coupled to the power plant for emitting exhaust fluid from the power plant, a hydrogen storage container coupled to the power plant, and an exhaust fluid temperature control system. The exhaust fluid temperature control system comprises:
a first heat exchanger adapted to exchange heat energy with the exhaust fluid,
a second heat exchanger adapted to exchange heat energy with the hydrogen storage container or with hydrogen inside the hydrogen storage container,
fluid conduits adapted to enable circulation of coolant fluid between the first and second heat exchangers, and
a circulation pump adapted to control circulation of said coolant fluid through said fluid conduits.

In use, the power plant provides power for operating the machine. As hydrogen from the hydrogen storage container is used to drive the power plant, exhaust fluid is formed. The exhaust fluid comprises a certain amount of water/water vapour. By cooling the exhaust fluid, the amount of water vapour is reduced by condensation of water vapour. The exhaust fluid temperature control system is used to exchange heat between the hot exhaust fluid and the cold hydrogen storage container. The cooling power provided by the temperature control system may be variable or it may be fixed, i.e. by controlling the rate of coolant fluid flow through the fluid conduits between the heat exchangers. The condensation of water from the exhaust fluid mitigates formation of fog.

In some examples, the power plant may comprise a hydrogen fuel cell or a hydrogen-powered internal combustion engine.

Hydrogen fuel cells and hydrogen-powered internal combustion engines are commonly available power plants powered by hydrogen.

In some examples, the exhaust temperature control system may further comprise:
a temperature sensor adapted to measure a temperature of the hydrogen storage container or of hydrogen inside the hydrogen storage container, and
an electronic control unit adapted to control the circulation pump based on at least an input from the temperature sensor.

Although the circulation pump could be operated according to predetermined logic, such as at a given rate or according to a schedule, it could instead be controlled using information from a temperature sensor. Controlling the circulation pump based on temperature information enables better control of the cooling of the exhaust fluid, for example avoiding too strong or too weak cooling.

In some examples, the control of the circulation pump may be such that that the circulation is decreased in response to said input from the temperature sensor indicating a temperature subceeding a first temperature threshold, and such that that circulation is increased in response to said input from the temperature sensor indicating a temperature exceeding a second temperature threshold.

In some examples, the second heat exchanger is integrated in the hydrogen storage container such that a wall of the second heat exchanger is exposed to hydrogen inside the hydrogen storage container.

In some examples, the temperature control system may further comprise a compressor adapted to form a heat pump together with at least the first heat exchanger and the second heat exchanger, said heat pump being adapted such that the first heat exchanger is an evaporator and such that the second heat exchanger is a condenser.

In some examples, the hydrogen storage container may comprise a plurality of hydrogen storage tanks.

In some examples, the hydrogen power system may further comprise a water tank adapted to receive water condensed from the exhaust fluid by the first heat exchanger.

A second aspect of the present disclosure relates to a vehicle comprising the hydrogen power system described above, wherein the vehicle is powered at least by said hydrogen-powered power plant.

In some examples, the vehicle may be a heavy-duty vehicle, such as a truck, bus, or construction equipment.

Heavy-duty vehicles sometimes operate a long time in a limited area, rather than driving along a road, and thus formation of fog is a greater problem for such vehicles. The present disclosure is thus especially advantageous in combination with such vehicles.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein.

### Brief description of drawings

With reference to the appended drawings, below follows a more detailed description of aspects of the disclosure cited as examples.
Fig. 1 shows a schematic view of an example of a hydrogen power system according to the present disclosure.
Fig. 2 shows a schematic view of a vehicle comprising a hydrogen power system according to the present disclosure.

### Detailed description

Aspects set forth below represent information enabling those skilled in the art to practice the disclosure.

A hydrogen power system may be used to provide power to drive a machine or a vehicle, either directly or by driving a generator for providing electric power used to drive the machine or vehicle. Hydrogen power systems use power from a source of hydrogen and a fuel cell or internal combustion engine to convert the hydrogen to power for the machine or vehicle. Exhaust fluid from the hydrogen power system may contain water and/or water vapour, causing fog around the area where the machine or vehicle is used. Fog reduces visibility and reduced visibility makes it more difficult to work and increases the risk of accidents.

A goal of the disclosure is to mitigate formation of fog caused by a hydrogen power system.

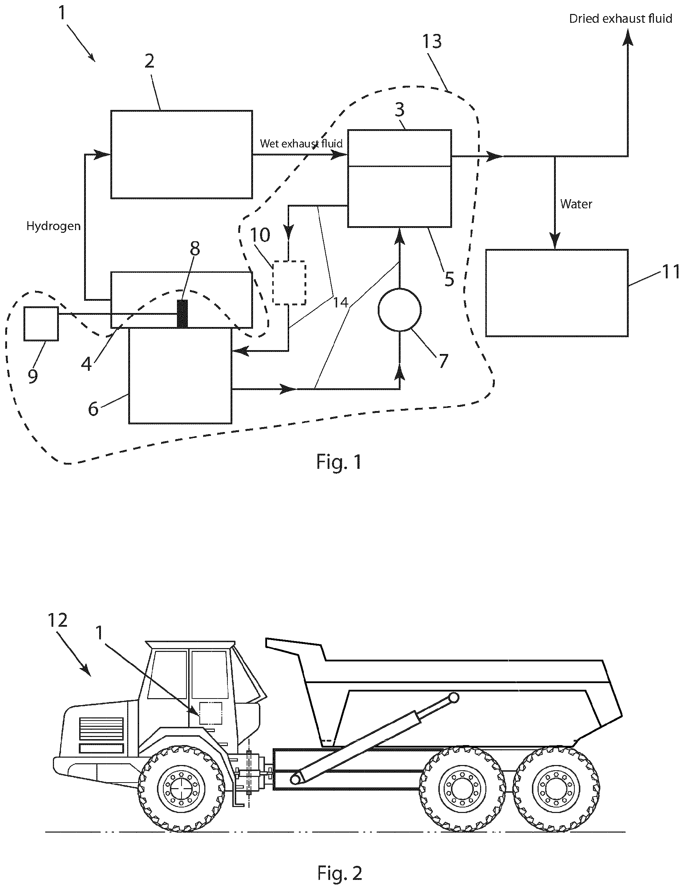

As shown in fig. 1, a hydrogen power system according to the present disclosure comprises a hydrogen-powered power plant 2, an exhaust 3 coupled to the power plant 2 for emitting exhaust fluid from the power plant 2, a hydrogen storage container 4 coupled to the power plant 2, and an exhaust fluid temperature control system 13. The exhaust fluid temperature control system 13 comprises:
a first heat exchanger 5 adapted to exchange heat energy with the exhaust fluid,
a second heat exchanger 6 adapted to exchange heat energy with the hydrogen storage container 4 or with hydrogen inside the hydrogen storage container 4,
fluid conduits 14 adapted to enable circulation of coolant fluid between the first 5 and second 6 heat exchangers, and
a circulation pump 7 adapted to control circulation of said coolant fluid through said fluid conduits 14.

The power plant 2 comprises a hydrogen fuel cell but may in other examples alternatively comprise a hydrogen-powered internal combustion engine.

The exhaust temperature control system 13 further comprises:
a temperature sensor 8 adapted to measure a temperature of the hydrogen storage container 4, and an electronic control unit 9 adapted to control the circulation pump 7 based on at least an input from the temperature sensor 8. In other examples, the temperature sensor may alternatively/additionally be configured to measure temperature of hydrogen inside the hydrogen storage container 4, or temperature of the exhaust fluid. In further examples, the temperature sensor 8 may be omitted, for example if circulation is not controlled by temperature but by some other suitable logic, such as according to a predetermined schedule, or in intervals defining on/off or high/low speed operation of the circulation pump 7. In yet further examples, the electronic control unit 9 may alternatively be omitted, for example if using a fixed speed of the circulation pump 7.

If the temperature sensor 8 measures temperature of the hydrogen storage container 4, the control of the circulation pump 7 is such that that said circulation is decreased in response to said input from the temperature sensor 8 indicating a temperature subceeding a first temperature threshold, and such that that circulation is increased in response to said input from the temperature sensor 8 indicating a temperature exceeding a second temperature threshold. Should the temperature sensor 8 measure temperature of the exhaust fluid, the control of the circulation pump 7 is adapted accordingly.

The general goal of the control of the circulation pump 7 is to provide a flow between the heat exchangers 5, 6 for using cooling power from the hydrogen storage container 4 at a high enough rate to avoid formation of fog from the exhaust fluid. Preferably, the fluid flow is not set higher than needed to prevent fog, in order to not heat the hydrogen storage container 4 more than necessary.

The second heat exchanger 6 may be integrated in the hydrogen storage container 4 such that a wall of the second heat exchanger 6 is exposed to hydrogen inside the hydrogen storage container 4. Alternatively, the second heat exchanger 6 may be adapted to exchange heat with an outer surface of the hydrogen storage container 4.

The temperature control system 13 may further comprise a compressor 10 adapted to form a heat pump together with at least the first heat exchanger 5 and the second heat exchanger 6. The heat pump is adapted such that the first heat exchanger 5 is an evaporator and the second heat exchanger 6 is a condenser.

The hydrogen storage container 4 comprises a plurality of hydrogen storage tanks but may in other examples alternatively comprise only one storage tank.

The hydrogen power system 1 further comprises a water tank 11 adapted to receive water condensed from the exhaust fluid by the first heat exchanger 5. In other examples, the water tank may alternatively be omitted, wherein condensed water is emitted elsewhere, such as on underlying ground.

As shown in fig. 2, the present disclosure also proposes to provide a vehicle 12 comprising the hydrogen power system 1 described above. The vehicle 12 is powered at least by the hydrogen-powered power plant 2 of the hydrogen power system 2.

The vehicle is typically a heavy-duty vehicle, such as a truck, bus, or construction equipment.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A hydrogen power system (1) comprising a hydrogen-powered power plant (2), an exhaust (3) coupled to the power plant (2) for emitting exhaust fluid from the power plant (2), a hydrogen storage container (4) coupled to the power plant (2), and an exhaust fluid temperature control system (13),
said exhaust fluid temperature control system comprising:
a first heat exchanger (5) adapted to exchange heat energy with the exhaust fluid,
a second heat exchanger (6) adapted to exchange heat energy with the hydrogen storage container (4) or with hydrogen inside the hydrogen storage container (4),
fluid conduits (14) adapted to enable circulation of coolant fluid between the first (5) and second (6) heat exchangers, and
a circulation pump (7) adapted to control circulation of said coolant fluid through said fluid conduits (14).

2. The hydrogen power system (1) according to claim 1, wherein the power plant (2) comprises a hydrogen fuel cell or a hydrogen-powered internal combustion engine.

3. The hydrogen power system (1) according to any one of claims 1-2, wherein said exhaust temperature control system (13) further comprises:
a temperature sensor (8) adapted to measure a temperature of the hydrogen storage container (4) or of hydrogen inside the hydrogen storage container (4), and
an electronic control unit (9) adapted to control the circulation pump (7) based on at least an input from the temperature sensor (8).

4. The hydrogen power system (1) according to claim 3, wherein said control of the circulation pump (7) is such that said circulation is decreased in response to said input from the temperature sensor (8) indicating a temperature subceeding a first temperature threshold, and
such that circulation is increased in response to said input from the temperature sensor (8) indicating a temperature exceeding a second temperature threshold.

5. The hydrogen power system (1) according to any one of claims 1-4, wherein the second heat exchanger (6) is integrated in the hydrogen storage container (4) such that a wall of the second heat exchanger (6) is exposed to hydrogen inside the hydrogen storage container (4).

6. The hydrogen power system (1) according to any one of claims 1-5, wherein the temperature control system (13) further comprises a compressor (10) adapted to form a heat pump together with at least the first heat exchanger (5) and the second heat exchanger (6), said heat pump being adapted such that the first heat exchanger (5) is an evaporator and such that the second heat exchanger (6) is a condenser.

7. The hydrogen power system (1) according to any one of claims 1-6, wherein said hydrogen storage container (4) comprises a plurality of hydrogen storage tanks.

8. The hydrogen power system (1) according to any one of claims 1-7, further comprising a water tank (11) adapted to receive water condensed from the exhaust fluid by the first heat exchanger (5).

9. A vehicle (12) comprising the hydrogen power system (1) according to any one of claims 1-8, wherein the vehicle is powered at least by said hydrogen-powered power plant (2).

10. The vehicle (12) according to claim 9, wherein the vehicle is a heavy-duty vehicle, such as a truck, bus, or construction equipment.

## Amended claims

### Amended claims in accordance with Rule 137(2) EPC.

1. A hydrogen power system (1) comprising a hydrogen-powered power plant (2), an exhaust (3) coupled to the power plant (2) for emitting exhaust fluid from the power plant (2), a hydrogen storage container (4) coupled to the power plant (2), and an exhaust fluid temperature control system (13),
said exhaust fluid temperature control system comprising:
a first heat exchanger (5) adapted to exchange heat energy with the exhaust fluid thereby cooling the exhaust fluid such that the amount of water vapour is reduced by condensation of water vapour,
a second heat exchanger (6) adapted to exchange heat energy with the hydrogen storage container (4) or with hydrogen inside the hydrogen storage container (4),
fluid conduits (14) adapted to enable circulation of coolant fluid between the first (5) and second (6) heat exchangers, and
a circulation pump (7) adapted to control circulation of said coolant fluid through said fluid conduits (14).

2. The hydrogen power system (1) according to claim 1, wherein the power plant (2) comprises a hydrogen fuel cell or a hydrogen-powered internal combustion engine.

3. The hydrogen power system (1) according to any one of claims 1-2, wherein said exhaust temperature control system (13) further comprises:
a temperature sensor (8) adapted to measure a temperature of the hydrogen storage container (4) or of hydrogen inside the hydrogen storage container (4), and
an electronic control unit (9) adapted to control the circulation pump (7) based on at least an input from the temperature sensor (8).

4. The hydrogen power system (1) according to claim 3, wherein said control of the circulation pump (7) is such that said circulation is decreased in response to said input from the temperature sensor (8) indicating a temperature subceeding a first temperature threshold, and
such that circulation is increased in response to said input from the temperature sensor (8) indicating a temperature exceeding a second temperature threshold.

5. The hydrogen power system (1) according to any one of claims 1-4, wherein the second heat exchanger (6) is integrated in the hydrogen storage container (4) such that a wall of the second heat exchanger (6) is exposed to hydrogen inside the hydrogen storage container (4).

6. The hydrogen power system (1) according to any one of claims 1-5, wherein the temperature control system (13) further comprises a compressor (10) adapted to form a heat pump together with at least the first heat exchanger (5) and the second heat exchanger (6), said heat pump being adapted such that the first heat exchanger (5) is an evaporator and such that the second heat exchanger (6) is a condenser.

7. The hydrogen power system (1) according to any one of claims 1-6, wherein said hydrogen storage container (4) comprises a plurality of hydrogen storage tanks.

8. The hydrogen power system (1) according to any one of claims 1-7, further comprising a water tank (11) adapted to receive water condensed from the exhaust fluid by the first heat exchanger (5).

9. A vehicle (12) comprising the hydrogen power system (1) according to any one of claims 1-8, wherein the vehicle is powered at least by said hydrogen-powered power plant (2).

10. The vehicle (12) according to claim 9, wherein the vehicle is a heavy-duty vehicle, such as a truck, bus, or construction equipment.
